# EUROPÄISCHE PATENTSCHRIFT

(11) **EP 3 478 989 B1**
(45) Veröffentlichungstag und Bekanntmachung des Hinweises auf die Patenterteilung: **13.07.2022**
(21) Anmeldenummer: 17725969.4
(22) Anmeldetag: 29.05.2017
(51) Int. Cl.: F16H 57/02, F16H 57/028, F16F 15/121, F16F 15/123, F16F 15/14, F16H 57/021, B60K 6/48

(54) **DREHMOMENTÜBERTRAGUNGSVORRICHTUNG**
TORQUE-TRANSMISSION DEVICE
DISPOSITIF DE TRANSMISSION DE COUPLE

(30) Priorität: 30.06.2016 DE 102016211945
(43) Veröffentlichungstag der Anmeldung: 08.05.2019
(73) Patentinhaber: ZF Friedrichshafen AG, 88046 Friedrichshafen (DE)
(72) Erfinder: WEBER, Paul, 97505 Geldersheim (DE); PITTNER, Daniel, 04654 Frohburg (DE); HAMMER, Peter, 97421 Schweinfurt (DE); STROM, Alexander, 97688 Bad Kissingen (DE); SIEMENS, Kyrill, 97084 Würzburg (DE); EINENKEL, Steffen, 96170 Priesendorf (DE); FREY, Peter, 97447 Gerolzhofen (DE); GROSSPIETSCH, Wolfgang, 97422 Schweinfurt (DE); SASSE, Christoph, 97422 Schweinfurt (DE); HERTEL, Martin, 97493 Bergrheinfeld (DE); MANGER, Alexander, 97508 Grettstadt (DE)
(74) Vertreter: ZF Friedrichshafen AG
(86) Internationale Anmeldenummer: PCT/EP2017/062836
(87) Internationale Veröffentlichungsnummer: WO 2018/001662

(56) Entgegenhaltungen:
- EP-A1- 1 736 345
- WO-A1-2004/003399
- DE-A1-102009 024 217
- DE-A1-102014 206 330
- DE-A1-102014 208 963
- DE-A1-102015 201 306
- FR-A1- 2 814 516
- US-A1- 2015 211 583

## Beschreibung

Vorliegende Erfindung betrifft eine Drehmomentübertragungsvorrichtung für einen Antriebsstrang eines Kraftfahrzeugs mit einem Eingangsbereich, der vornehmlich von einem Verbrennungsmotor gebildet wird, einer nachfolgenden Drehschwingungsdämpfungseinheit sowie einer Getriebeanordnung und einem Nachfolgendem Ausgangsbereich, der vornehmlich von einer Getriebeausgangswelle gebildet wird.

Aus dem Stand der Technik der DE 10 2014 206 330 A1 ist eine Drehmomentübertragungsvorrichtung bekannt, bei der zwischen einem Antriebsaggregat und einem Getriebeaggregat eine Drehschwingungsdämpfungsanordnung mit einem Tilger in einem Gehäusebereich vorgesehen ist.

Auch die US 2011259698 AA zeigt eine Drehmomentübertragungsvorrichtung mit einer Drehschwingungsdämpfungsanordnung, umfassen einen Torsionsdämpfer und einen Tilger, in eine Gehäusebereich vor einem Getriebeaggregat.

Weiter offenbart die DE 10 2009 024 217 A1 einen Drehschwingungsdämpfer mit einer Tilgereinheit in einem Gehäusebereich.

Auch die DE 10 2015 201 306 A1, auf welcher die zweiteilige Anspruchsfassung basiert, offenbart eine Drehmomentübertragungseinrichtung mit einer Drehschwingungsdämpfungsanordnung, umfassen einen Torsionsdämpfer und einem Radialschwingungsdämpfer in einem Gehäusebereich vor einem Getriebeaggregat.

Nachteilig an dieser aus dem Stand der Technik bekannte Drehmomentübertragungsvorrichtung ist jedoch, dass die einzelnen Komponenten, die zum einen für die Drehschwingungsreduzierung und zum anderen für die Drehmomentübertragung verantwortlich sind, ihrer Funktionsweise entsprechend nicht vorteilhaft, platzsparend und kostengünstig in der Drehmomentübertragungsvorrichtung vorgesehen oder angeordnet sind.

Aufgabe vorliegender Erfindung ist es deshalb, eine Drehmomentübertragungsvorrichtung bereitzustellen, bei der eine Drehschwingungsreduzierung, sowie eine Drehmomentübertragung leistungsfähig, platzsparend und kostengünstig vorgesehen ist.

Diese Aufgabe wird durch eine Drehmomentübertragungsvorrichtung gemäß Patentanspruch 1 gelöst.

Dabei sieht die Erfindung eine Drehmomentübertragungsvorrichtung für einen Antriebsstrang eines Kraftfahrzeuges vor, einen um eine Drehachse (A) drehbaren Eingangsbereich und einen um eine Drehachse B drehbaren Ausgangsbereich, einen Drehmomentweg (M), der von dem Eingangsbereich zu dem Ausgangsbereich verläuft, wobei zwischen dem Eingangsbereich und dem Ausgangsbereich entlang des Drehmomentweges (M) zuerst eine Drehschwingungsdämpfungseinheit und nachfolgend eine Getriebeeinheit positioniert sind, wobei die Drehschwingungsdämpfungseinheit entlang des Drehmomentwegs einen ersten Raumbereich und einen angrenzenden zweiten Raumbereich vorsieht, sowie dass die Getriebeeinheit einen angrenzenden dritten Raumbereich vorsieht, wobei in dem zweiten Raumbereich im Drehmomentweg eine Tilgereinheit vorgesehen ist, wobei in dem zweiten Raumbereich nach der Tilgereinheit im Drehmomentweg ein zweiter Federsatz oder weitere Federsätze vorgesehen sind, wobei im ersten Raumbereich ein erster Federsatz oder eine Winkelversatzausgleichseinheit vorgesehen ist, wobei im zweiten Raumbereich ein elektrisches Antriebsaggregat mit einem Rotor und einem Stator in dem Drehmomentweg vorgesehen ist, wobei der Rotor entlang des Drehmomentweges vom Eingangsbereich zum Ausgangsbereich nach dem zweiten Federsatz vorgesehen ist, wobei eine maximale radiale Erstreckung der Tilgereinheit größer ist als eine maximale radiale Erstreckung des Rotors.

Dabei sind die Raumbereiche so ausgeführt, dass der erste Raumbereich zu dem zweiten Raumbereich und der zweite Raumbereich zu dem dritten Raumbereich so abgegrenzt ist, dass kein viskoses Medium, wie beispielsweise Öl oder Fett von einem Raumbereich zum anderen Raumbereich gelangen kann. Weiter kann der Eingangsbereich vornehmlich von einem Ausgangselement eines Antriebsaggregates, beispielsweise eine Kurbelwelle eines Verbrennungsmotors, gebildet werden. Der Ausgangsbereich kann beispielsweise durch eine Ausgangswelle der Getriebeeinheit gebildet werden.

In einer weiteren vorteilhaften Ausgestaltung umfasst die Getriebeeinheit eine Getriebeanordnung, insbesondere ein automatisiertes Planetenradgetriebe oder ein manuelles oder automatisiertes Schaltgetriebe. Dabei ist ein automatisiertes Planetengetriebe auch als Automatikgetriebe bekannt. Ferner kann auch ein Doppelkupplungsgetriebe verwendet werden.

Weiter kann es günstig sein, wenn der erste Raumbereich ein Trockenraum ist und dass der zweite Raumbereich ein Feuchtraum ist und dass der dritte Raumbereich ein Nassraum ist. Dabei wird die Auswahl so getroffen, dass in dem Trockenraum die Bauteile verbaut sind, die vorteilhaft trockenlaufend sind, wie dies beispielsweise bei einem Zweimassenschwungrad der Fall ist. Das Zweimassenschwungrad hat zwar eine Fettfüllung, jedoch ist das Zweimassenschwungrad gekapselt ausgeführt, so dass in vorteilhafter Weise im Betrieb kein Fett oder ein anderes viskoses medium austritt. Von daher ist das Zweimassenschwungrad vorteilhaft in dem Trockenraum zu verwenden. Auch ist der Trockenraum vorzugsweise zu der Seite, die zu dem Antriebsaggregat zeigt offen, so dass eine Abdichtung dieses Raumes auf dieser Seite nur schwer möglich ist.

Eine weiter Ausführung sieht vor, dass zweite Raumbereich, der hier einen Feuchtraum darstellt, die Bauteile der Drehmomentübertragungsanordnung aufnimmt, die vorteilhaft in einem feuchten ölnebelhaltigen Raum betrieben werden sollen. Dies bedeutet, dass hier Bauteile angeordnet sind, die nicht mit einem definierten und konkret gerichteten Ölstrom durchlaufen werden. In vorteilhafter Anwendung werden in dem Feuchtraum beispielsweise ein Federsatz oder auch mehrere Federsätze sowie die Tilgereinheit betrieben. Dabei können die Federsätze so ausgeführt sein, dass sie keine umlaufende Kapselung aufweisen sondern dass der im Feuchtraum enthaltene Ölnebel als Schmiermittel benutzt werden kann. Ebenso ist es vorteilhaft, die Tilgereinheit in dem Feuchtraum zu betreiben, da die Tilgereinheit keinen konkreten Ölstrom benötigt, sondern eine Schmierung mit Ölnebel ausreichend ist. Von daher wird der Feuchtraum nur mit einer geringen Menge eines viskosen Mediums befüllt sein. Dabei dient das viskose Medium wie Öl oder auch einer Fettemulsion zur Reibungsminimierung und Verschleißminimierung. Der dritte Raumbereich stellt hier vorteilhaft einen Nassraum dar. Dabei wird der Nassraum dadurch gekennzeichnet, dass dieser mit Öl bzw. einem anderen viskose Medium befüllt ist, so dass die dort im Nassraum aufgenommenen Bauteile, die vorteilhaft eine Getriebeanordnung umfassen, in einem Ölbad laufen und/oder von einem gerichteten Ölstrom durchflossen sind. Von daher stellt der Nassraum die größte Anforderung für eine Abdichtung zu der Umgebung bzw. zu dem zweiten Raumbereich dar.

Weiter kann es vorteilhaft sein, wenn der erste Raumbereich zu dem zweiten Raumbereich mittels eines separaten Trennelements abgetrennt ist. Diese Ausführungsform ist besonders vorteilhaft, da der zweite Raumbereich mit den Bauteilen, wie beispielsweise der Tilgereinheit oder auch der mit einem Federsatz bzw. mit weiteren Bauteilen wie beispielsweise auch einen Elektromotor und eine Trennkupplung versehen werden können. Nachdem diese Bauteile in diesem zweiten Raumbereich eingebaut wurden, kann dieser Raumbereich mit dem separaten Trennelement öldicht verschlossen werden. Dabei erfolgt eine Abdichtung des Trennelementes radial außen über einen umlaufenden Ohrring wohingegen die Abdichtung radial innen zu einer radial innen verlaufenden Welle, die vorteilhaft von einer Getriebeeingangswelle gebildet wird, mittels eines Radialwellendichtringes. Dabei kann das Trennelement als ein Blechteil, als ein Gussteil, als ein Drehteil aber auch als ein CFK-Teil ausgeführt werden. In vorteilhafter Ausführung ist das Trennelement an die Bauteilform der Bauteile im ersten und im zweiten Raumbereich angepasst. Dies bedeutet, dass ein axialer Abstand zwischen dem Bauteil im ersten Raumbereich und dem Bauteil im zweiten Raumbereich möglichst gering ist. Dies ist vorteilhaft für eine kompakte axiale Bauweise.

Eine weitere vorteilhafte Ausführungsform sieht vor, dass das Trennelement mit einer radial außen umlaufenden Dichtung versehen ist. Wie bereits vorrangehend beschrieben, erfolgt die Abdichtung des Trennelementes radial außen über einen umlaufenden Dichtring der vorteilhaft von einem Ohrring gebildet wird.

Weiter kann es günstig sein, dass der zweite Raumbereich zu dem dritten Raumbereich mittels eines separaten Trennelements abgetrennt ist oder, wobei das Trennelement integral mit einem Gehäuseelement der Drehschwingungsdämpfungseinheit oder integral mit einem Gehäuseelement der Getriebeeinheit gebildet ist. Dabei kann die Abtrennung des zweiten Raumbereiches zu dem dritten Raumbereich in ähnlicher Weise erfolgen wie die Abdichtung des ersten Raumbereiches zu dem zweiten Raumbereich nämlich mit dem Trennelement, welches als separates Bauteil eingesetzt wird. Es ist jedoch auch möglich das Trennelement integral mit dem Gehäuseelement der Getriebeeinheit auszuführen. Dabei erfolgt eine Abdichtung radial innen vornehmlich durch einen Radialwellendichtring.

Weiter kann vorgesehen sein, dass das Gehäuseelement der Drehschwingungsdämpfungseinheit und das Gehäuseelement der Getriebeeinheit integral ausgebildet sind. Dabei wird das Gehäuseelement der Drehschwingungsdämpfungseinheit und des Gehäuseelement der Getriebeeinheit als ein Bauteil ausgeführt. In vorteilhafter Weise als ein Aluminiumgussteil. Dies bedeutet weiterhin, dass die drei Raumbereiche nämlich der Trockenraum, der Feuchtraum und der Nassraum von einem einzigen Gehäuseelement gebildet werden. Dies ist besonders vorteilhaft bei der Herstellung sowie auch bei einem Verkauf der Drehmomentübertragungsanordnung da das Bauteil, nämlich die Drehmomentübertragungsanordnung, eine einzige kompakte Einheit darstellt, die die drei Raumbereiche Trockenraum, Feuchtraum und Nassraum bilden. Zur weiteren Verdeutlichung würde es sich dann hier um ein Getriebe handeln, bei dem die bisher bekannte Kupplungsglocke zweiteilig ausgeführt ist, nämlich als Trocken- und Feuchtraum, wohingegen der dritte Raumbereich das eigentliche Getriebe, beispielsweise das Automatikgetriebe oder ein Schaltgetriebe, ein automatisiertes Schaltgetriebe aufnimmt.

Eine weitere günstige Ausführungsform sieht vor, dass der erste Federsatz einreihig oder mehrreihig ausgebildet ist. Der einreihige Federsatz ist besonders vorteilhaft da er kompakt baut und sowohl mit einer Bogenfeder als auch mit einer geraden Schraubendruckfeder bzw. Schraubendruckfedersetzen betrieben werden kann. Es ist jedoch auch möglich, den Federsatz mehrreihig auszubilden. Dies bedeutet, dass vornehmlich radial innerhalb oder radial außerhalb bzw. auch in axialer paralleler Ausführung weitere Federsätze vorhanden sind. Hierdurch kann die Leistungsfähigkeit des Federsatzes gesteigert werden.

Auch kann vorgesehen sein, dass im ersten Raumbereich und / oder im zweiten Raumbereich ein elektrisches Antriebsaggregat in dem Drehmomentweg vorgesehen sein. Für den Fall dass die Drehmomentübertragungsanordnung hybridisiert werden soll, eigenen sich besonders der erste Raumbereich und der zweite Raumbereich für die Anbringung des elektrischen Antriebsaggregates, sprich einen Elektromotor. Bei der Anordnung des E-Motors im ersten Raumbereich kann dieser beispielsweise als bekannter 48-Volt-Elektromotor auf der Kurbelwelle montiert sein. Wobei der Elektromotor in dem ersten Raumbereich ragt. Es ist jedoch auch hier möglich, den Elektromotor mittels einer Trennkupplung bei einer Positionierung des Elektromotors im zweiten Raumbereich mit dieser vorteilhaften Ausführungsform, meist mit einer Trennkupplung betrieben, die bei eingeschaltetem Elektromotor den Drehmomentweg von dem konventionellen Antriebsaggregat jeder Verbrennungsmotor unterbricht. Dabei ist der elektrische Motor konzentrisch zu der Getriebeeingangswelle angeordnet. Der Stator wird dabei in vorteilhafter Ausführungsform radial außen drehfest am Gehäuse befestigt, wohingegen der Rotor mit der Trennkupplung wirkverbunden ist. Die Trennkupplung die vornehmlich als nasslaufende Lamellenkupplung ausgeführt ist, wird dabei für eine kompakte Bauweise radial innerhalb des Rotors positioniert. Die Ansteuerung der Trennkupplung kann dabei elektrisch oder auch hydraulisch erfolgen.

Weiter kann im Drehmomentweg vor dem elektrischen Antriebsaggregat eine Trennkupplung vorgesehen sein, wobei die Trennkupplung den Dreh-momentweg vom Eingangsbereich bis zum Ausgangsbereich unterbrechen kann und ein Drehmoment, das von dem elektrischen Antriebsaggregat erzeugt wird, zu dem Ausgangsbereich verläuft.

In einer weiteren günstigen Ausgestaltung ist die Trennkupplung geeignet, das Drehmoment oder Drehmomentanteile von dem Eingangsbereich zu dem Ausgangsbereich zu leiten. Dabei kann die Trennkupplung so ausgeführt sein, dass diese nicht nur als open-close-Kupplung verwendet wird, sondern auch als Schlupfkupplung Anwendung findet. Dies bedeutet, dass die Kupplung nicht die gesamte Drehzahl von dem Verbrennungsmotor zu der Getriebeeingangswelle weiterleitet.

Auch kann es vorteilhaft sein, dass die Drehachse (A) zu der Drehachse (B) koaxial verläuft oder dass die die Drehachse (A) zu der Drehachse (B) achsversetzt verläuft. Dabei verlaufen die Drehachsen A und B vorteilhaft dann koaxial, wenn es sich um ein Hecklängsantriebsstrang handelt. Bei Frontqueranwendungen können die Drehachsen A und B, also die Drehachse des Eingangsbereiches und des Ausgangsbereiches, axtversetzt verlaufen.

Weiter kann die Getriebeanordnung ein Anfahrelement im Drehmomentweg vorsehen. Dabei wird auch von einem sogenannten inneren Anfahrelement gesprochen. Sieht die Getriebeanordnung ein automatisiertes Planetenradgetriebe vor, so kann ein Planetenradsatz mit Bremse als Anfahrelement genutzt werden. Das innere Anfahrelement kann daher ein bekanntes Anfahrelement, wie beispielsweise einen Drehmomentwandler oder eine Reibkupplung ersetzten. Es kann aber auch ein Anfahrelement in Form einer weiteren Kupplung im Getriebe vorgesehen sein.

Eine weitere vorteilhafte Ausführung kann vorsehen, dass das Anfahrelement als eine Reib-kupplung oder eine Lamellenkupplung oder eine Lamellenbremse ausgeführt ist. Dabei wird die Reibkupplung oder die Lamellenkupplung oder die Lamellenbremse vorteilhaft nasslaufend ausgeführt.

Im Folgenden soll die Erfindung anhand von Darstellungen näher erläutert werden. Dabei stellen die in den Zeichnungen dargestellten Ausführungsbeispiele lediglich bevorzugte Ausführungen dar und sollen nicht den Rahmen der Erfindung festlegen. Dieser wird allein durch die anhängigen Ansprüche definiert.

Es zeigen in
- Figur 1:: eine Darstellung einer erfindungsgemäßen Drehmomentübertragungsanordnung;
- Figuren 2 bis 12:: weitere Ausführungsvarianten der erfindungsgenmäßen Drehmomentübertragungsanordnung

Im Folgenden werden gleiche oder funktionell gleichwirkende Bauteile mit den gleichen Bezugszeichen bezeichnet.

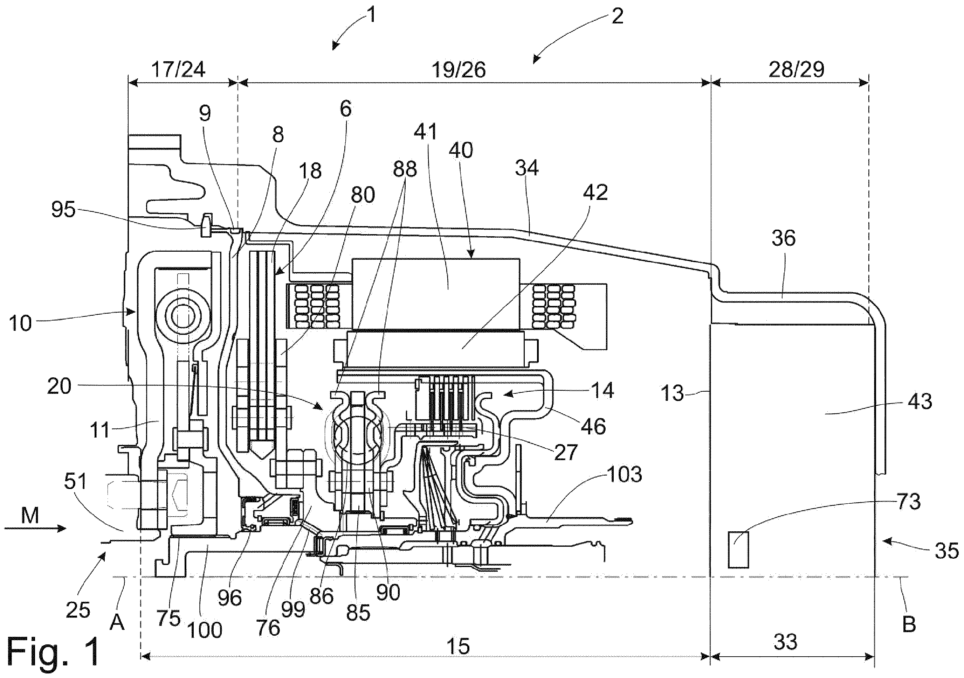

Die Figur 1 zeigt eine Drehmomentübertragungsanordnung 1 für ein automatisiertes Hybridgetriebe 2. Dabei ist ein Grundaufbau wie folgt in einer Reihenfolge eines Drehmomentweges M von einem Eingangsbereich 25, der beispielsweise von einem Verbrennungsmotor gebildet werden kann zu einem Ausgangsbereich 35, der beispielsweise von einer Ausgangswelle eines Getriebes gebildet werden kann. Die Drehmomentübertragungsanordnung gliedert sich in drei Raumbereiche auf. Ein erster Raumbereich 17, der auch als ein Trockenraum 24 bezeichnet werden kann, ein nachfolgender zweiter Raumbereich 19, der auch als ein Feuchtraum 26 bezeichnet werden kann und ein nachfolgender dritter Raumbereich 28, der auch als ein Nassraum 29 bezeichnet werden kann. Ein erster Torsionsdämpfer 10 befindet sich in dem ersten Raumbereich 17 und ist als ein Zweimassenschwungrad ausgeführt. Dieser kann mit einer Fettfüllung betrieben werden und wird vorzugsweise in dem Trockenraum, in dem kein viskoses Medium enthalten ist, platziert. Der zweite Torsionsdämpfer 20 ist in dem zweiten Raumbereich 19 integriert und befindet sich somit in dem Feuchtraum 26, der einen ölnebelhaltigen, allerdings nicht mit Öl befüllten Arbeitsraum darstellt. Zwischen den beiden Torsionsdämpfern 10, 20 ist ein drehzahladaptiver Tilger 6 angeordnet. Dieser befindet sich ebenfalls im ölnebelhaltig en Feuchtraum 26. Das Verhältnis einer axialen Bauraumhöhe von dem Trockenraum 24 zu dem Feuchtraum 26 der Drehmomentübertragungsanordnung 1 liegt in einem Verhältnis von 1:3 bis 1:5.

Vorteilhaft bei dieser Variante sind eine effiziente und kostengünstige Bauraumausnutzung, sowie eine daraus resultierende hohe Güte der Entkopplung von Drehungleichförmigkeiten, die von dem Antriebsaggregat, beispielsweise die Verbrennungsmaschine eingeleitet werden. Durch einen Verzicht einer hydrodynamischen Drehmomentübertragung und eines umlaufenden Gehäuses, also der Verzicht auf einen hydrodynamischen Drehmomentwandler in der Drehmomentübertragungsanordnung 1, steht folglich mehr radialer Bauraum für die Tilgereinheit 6 zur Verfügung. Auf diese Weise kann die Tilgereinheit 6 radial sehr nah an eine Bauraumgrenze, hier ein Gehäuseelement 34 des zweiten Raumbereiches 19, das auch als Getriebegehäuse bezeichnet werden kann herangeführt werden. Unter einer Berücksichtigung einer Toleranzsituation kann ein Verhältnis zwischen einem Außendurchmesser der Tilgermassen 18 und dem Getriebegehäusedurchmesser auf ein technisch sinnvolles Intervall von 0.9 bis 0.98 ausgelegt werden. Diese Intervallgrenzen beziehen sich auf einen maximalen Bauraum von einer Größenordnung eines Tilgermassendurchmessers von 300±20 mm, welcher durch die Geometrie des Getriebegehäuses festgelegt wird.

Eine Leistungsfähigkeit des drehzahladaptiven Tilgers 6 lässt sich durch eine Kenngröße MDAT1000 beschreiben. Diese Kenngröße beschreibt, welches maximale Rückstellmoment des drehzahladaptiven Tilgers 6 bei einer Drehzahl von 1000 min-1 zur Verfügung steht. Somit ist das MDAT1000 eine sinnvolle Hilfsgröße zur Definition der Leistungsfähigkeit eines des drehzahladaptiven Tilgers 6, Drehungleichförmigkeiten eines Verbrennungsmotors zu kompensieren. Durch die Ausnutzung des radialen Bauraums kann das MDAT1000 trotz einer engen axialen Bauraumsituation sehr hoch ausgeführt werden. Der Quotient aus MDAT1000 [Nm] und der axialen Bauhöhe des des drehzahladaptiven Tilgers 6 [mm], gemessen inklusive einer Materialstärke der Bahnbleche des drehzahladaptiven Tilgers 6, ergibt sich in technisch sinnvollen Intervallgrenzen von 4 bis 8.5 [Nm / mm]. Für eine ideale Abdeckung von unterschiedlichen Verbrennungsmotoren mit unterschiedlichen Zylinderzahlen ist der des drehzahladaptiven Tilgers zudem skalierbar. Die Skalierung wird durch ein Hinzufügen, bzw. ein Entfernen einzelner Paketen bzw. Reihen von Tilgermassen 18 realisiertun stellt damit auch eine Basis für ein Baukastensystem durch unterschiedliche Paketierungen dar.

Die Einleitung des Drehmoments M in die Drehmomentübertragungsanordnung 1 erfolgt von einer Kurbelwelle 51 über ein Primärblech 11 in den ersten Torsionsdämpfer 10, der hier als ein Zweimassenschwungrad ausgeführt ist. Von dem ersten Torsionsdämpfer 10 wird das Drehmoment M über eine Steckverzahnung 75 an eine Nabe 76 des Tilgers 6 weitergeleitet. Die Nabe 76 ist ein integratives Bauteil, welches unter anderem die Weiterleitung des Drehmoments von dem trockenen Arbeitsraum 24 in den feuchten, ölnebelhaltigen Arbeitsraum 26 realisiert. Über ein ebenes rechtes Bahnblech 80 ist die Tilgereinheit 6 an die Tilgernabe 76 angenietet. Über eine zweite Steckverzahnung erfolgt die Drehmomentweiterleitung von der Tilgernabe 76 auf eine Nabenscheibe 85 des zweiten Torsionsdämpfers 20 im ölnebelhaltigen Arbeitsraum 26. Der zweite Torsionsdämpfer 20 besteht aus einer Nabenscheibe 85 mit einer Innenverzahnung, mehreren zylindrischen Schraubendruckfedern 86 oder wahlweise gebogene Schraubendruckfedern und zwei symmetrischen Abdeckblechen 88. Eine Torsionsdämpfer-Federkennlinie kann sowohl einstufige, als auch mehrstufig ausgeführt sein. Über mehrere Abstandsstücke 90 sind die beiden Abdeckbleche 88 und an einen Innenlamellenträger 27 einer Trennkupplung 14 miteinander gefügt. Für eine Erhöhung der Eigensteifigkeit können die Abdeckbleche 88 im Querschnitt eine doppelte S-Schlaggeometrie aufweisen. Auf diese Weise wird eine Aufspreizbewegung aufgrund von Fliehkraft und radialer Federanlage bei hohen Drehzahlen entgegen gewirkt. Über den Innenlamellenträger 27, wird das verbrennungsmotorische Drehmoment M in die Trennkupplung, die auch als eine sogenannte K0-Kupplung bezeichnet werden kann abtriebsseitig weitergeleitet.

Vorteilhaft ist zudem die Positionierung des zweiten Torsionsdämpfers 20 radial innerhalb eines Rotorträgers 46 eines elektrischen Antriebsaggregates 40, das innerhalb des Feuchtraumes 26 positioniert ist. Auf diese Weise wird der vorhandene Bauraum sehr effizient genutzt und es erfolgt ein direkter Kraftfluss vom zweiten Torsionsdämpfer 20 in die Trennkupplung 14, wodurch der Innenlamellenträger 27 kompakt und kostengünstig ausgeführt werden kann. Unter einer Berücksichtigung der Toleranzsituation kann ein Verhältnis zwischen dem Außendurchmesser der Abdeckbleche 88 und dem Rotorträgerdurchmesser auf ein technisch sinnvolles Intervall von 0.9 bis 0.98 ausgelegt werden. Diese Intervallgrenzen beziehen sich auf einen maximalen Bauraum von der Größenordnung mit einem Durchmesser von 170±20 mm, welcher durch die Geometrie des Rotorträgers 46 festgelegt wird. Der zweite Torsionsdämpfer 20 ist durch seine geringe radiale Erstreckung in seiner Leistungsfähigkeit beschränkt. Dies wird jedoch durch den Einsatz des davor geschalteten und leistungsstarken drehzahladaptiven Tilgers 6 deutlich überkompensiert, woraus sich eine sehr gute Entkopplungsgüte von Drehungleichförmigkeiten ergibt. Ein Steifigkeitsverhältnis zwischen dem ersten und dem zweiten Torsionsdämpfer 10; 20 liegt von 1:7 bis 1:10. Dabei beträgt ein Verhältnis zwischen dem Federaußendurchmesser des ersten und zweiten Torsionsdämpfers 10; 20 ungefähr 1±0.3. Eine Trennung von dem trockenen Arbeitsraum 24 zu dem feuchten Arbeitsraum 26 erfolgt durch eine im Getriebegehäuse montierte Schottwand 8, hier als Lagerschild bezeichnet. In der Figur 1 ist das Lagerschild 8 als ein Druckgussbauteil aus Aluminium ausgeführt. An dem Außendurchmesser des Lagerschildes 8 wird ein Spalt zwischen dem Lagerschild und dem Getriebegehäuse 34 mittels einer statischen O-Ringdichtung 9 abgedichtet. Über einen Sprengring 95 wird das Lagerschild 8 an dem Gehäuse 34 axial gesichert. Am Innendurchmesser des Lagerschilds 8 befindet sich ein Radialwellendichtring 96, welcher eine dynamische Abdichtung zwischen dem stehenden Lagerschild 8 und der mit einer Drehzahl des Verbrennungsmotors rotierenden Tilgernabe 76 sicherstellt.

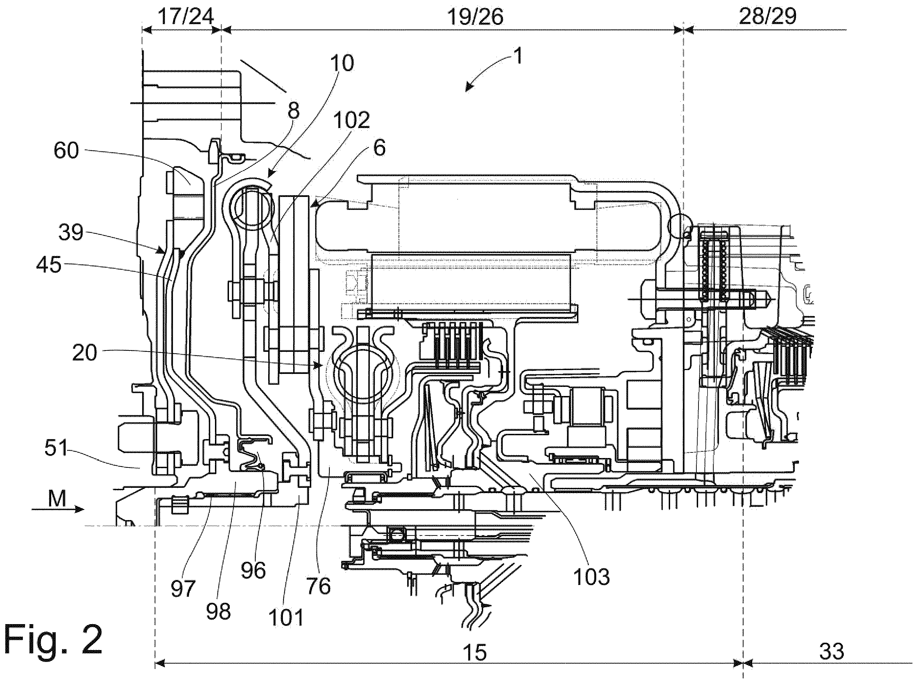

Für eine Lagerung der Tilgernabe 76 sind jeweils zwei Radial- und Axialwälzlager vorgesehen, hier auch als Nadelhülsen dargestellt. Motorseitig stützen sich die Nadelhülsen im Lagerschild 8 ab. Getriebeseitig erfolgt eine Abstützung an einer Rotornabe 103, welche mit dem Rotorträger 46 des Elektromotors verschweißt ist. Eine Einstellung eines axialen Montagespiels erfolgt mittels einer Einstellscheibe, welche zwischen dem Axiallager am Lagerschild 8 und der Tilgernabe 76 positioniert wird. Der Radialversatz zwischen der Kurbelwelle und einer Getriebeeingangswelle wird vollständig von dem Zweimassenschwungrad 10 ausgeglichen. Für eine Sicherstellung der erforderlichen Dauerlaufleistung werden die tribologischen Systeme im ölnebelhaltigen Arbeitsraum 26 mit einem definierten Schmierölvolumenströmen versorgt. Dabei wird von der Getriebeeingangswelle 100 ein Schmierölvolumenstrom durch einen blendenförmigen Widerstand in eine Sacklochbohrung der Tilgernabe 76 eingespritzt. Über mehrere Querbohrungen 99 in der Tilgernabe erfolgt eine Aufteilung dieses Schmierölvolumenstroms auf die tribologischen Systeme Wälzlagerung, Laufbahn der Tilgermassen 18 und den Kontaktbereich zwischen Torsionsfeder und Abdeckbleche bzw. Nabenscheibe. Die Stützringgeometrie des Tilgers 6 ist so ausgeführt, dass der von den Querbohrungen abgezweigte Schmierölvolumenstrom definiert zu den Laufbahnen der Tilgermassen 18 und den Bahnblechen 80 geleitet wird In der Figur 2 ist eine weitere Ausführungsmöglichkeit einer Drehmomentübertragungsanordnung 1 dargestellt. Im Gegensatz zu der Figur 1 ist hierbei der erste Torsionsdämpfer 10 hinter dem Lagerschild 8 angeordnet, wodurch sich die gesamte Drehschwingungsdämpfungsanordnung, die hier von dem ersten Torsionsdämpfer 10, der Tilgereinheit 6 und dem zweiten Torsionsdämpfer 20 gebildet wird im ölnebelhaltigen Arbeitsraum 26 befindet. Der Vorteil dieser Ausführung ist die effiziente Ausnutzung des vorhandenen Bauraums bei einer gleichzeitig hohen Entkopplungsgüte von Drehungleichförmigkeiten. Dadurch, dass die gesamte Drehschwingungsdämpfungsanordnung komplett im Gehäuseelement 34 integriert ist, kann das komplette System , also die Drehschwingungsdämpfungseinheit 15 mit der Getriebeeinheit 33 als Ganzes an den Kunden geliefert werden.

Anders als in der Figur 1 erfolgt der Drehmomentweg M nicht über ein Zweimassenschwungrad, sondern über eine Flexplate 39, welche mit einem Anbindungsblech 45, auch als Driveplate bezeichnet verschraubt ist. Das Anbindungsblech 45 ist wiederrum mit einer äußeren Zwischennabe 98 vernietet, welche an der Kurbelwelle 51 radial zentriert ist. Auf dieser äußeren Zwischennabe 98 befindet sich ein Dichtsitz für einen Radialwellendichtring 96 zur Trennung des Trocken- und Feuchtraums 24; 26. Der Radialwellendichtring 96 wird in dem einteiligen Lagerschild / Schottwand 8, welche hier vorzugsweise aus einem dünnwandigen Stahlblech besteht, montiert. Über eine vorgespannte Steckverzahnung 97 erfolgt die Drehmomentweiterleitung von der äußeren Zwischennabe 98 auf die innere Zwischennabe 101, die mit dem ersten Federsatz 10 wirkverbunden ist.

Das rechte Abdeckblech 102 des ersten Torsionsdämpfers 10 dient gleichzeitig als linkes Bahnblech des drehzahladaptiven Tilgers 6. Dazu weist das Bahnblech lokale Einprägungen auf, damit die Nietköpfe der Abstandsstücke vollständig in der Anlageebene des Bahnblechs verschwinden und somit keine Beeinträchtigung des Bewegungsfreiraums der Tilgermassen 18 vorliegt. Die Weiterleitung des Drehmoments erfolgt über das rechte Bahnblech in die Torsionsdämpfernabe des zweiten Torsionsdämpfers 20. Der restliche Funktionspfad bis zur Trennkupplung erfolgt analog der in der Figur 1 beschriebenen Variante. Die axiale Abstützung der Tilgernabe 76 erfolgt motorseitig über ein Axiallager an der Zwischennabe des ersten Torsionsdämpfers 10 und getriebeseitig über ein Axiallager an der Rotornabe 103.

Zur Erhöhung einer Primärträgheit vor dem ersten Torsionsdämpfer 10 ist an das Anbindungsblech /Driveplate 45 ein Massering 60 gefügt. In Kombination mit einem optionalen Anlasserzahnkranz, hier nicht dargestellt, wird auf diese Weise die Massenträgheit vor der Drehschwingungsdämpfungseinheit 15 gezielt erhöht.

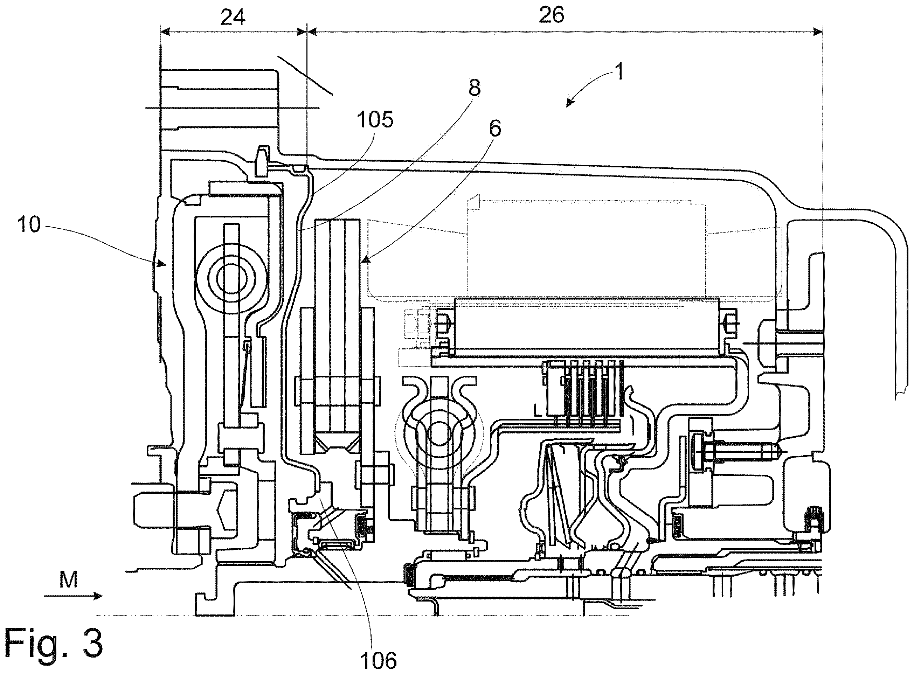

Die Figur 3 zeigt eine Ausführungsform wie in der Figur 1 beschrieben, jedoch ist hier das Lagerschild 8 zwischen dem Trockenraum 24 und dem Feuchtraum 26 als ein zweiteiliges Bauteil ausgeführt. Der äußere Teil ist ein dünnwandiges Tiefziehblech 105, vergleichbar wie in der Figur 2 beschrieben, welches radial innen mit einem Gussflansch 106 gefügt ist. In diesem Gussflansch 106 ist die Wälzlagerung und dynamische Dichtung, analog wie in der Figur 1 beschrieben, integriert. Aufgrund der geringen Blechstärke des Lagerschilds 8 im Bereich der Engstellen zwischen den umlaufenden Bauteilen, hier das Zweimassenschwungrad 10 und der Tilgereinheit 6 ist mehr axialer Bauraum zur Funktionserfüllung des Zweimassenschwungrades 10 und der Tilgereinheit 6 als in Figur 1 vorhanden.

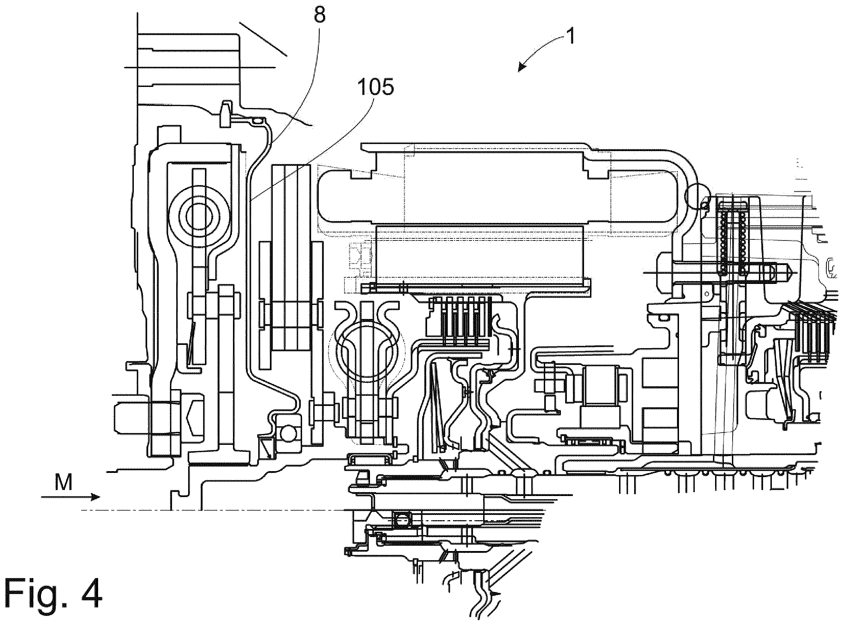

Die Figur 4 zeigt ein Lagerschild 8 vollständig aus einem dünnwandigen Tiefziehblech. Im Gegensatz zu der in Figur 1 beschriebenen Variante als Wälzlagerung ein Rillenkugellager anstelle zweier Nadelhülsen verwendet.

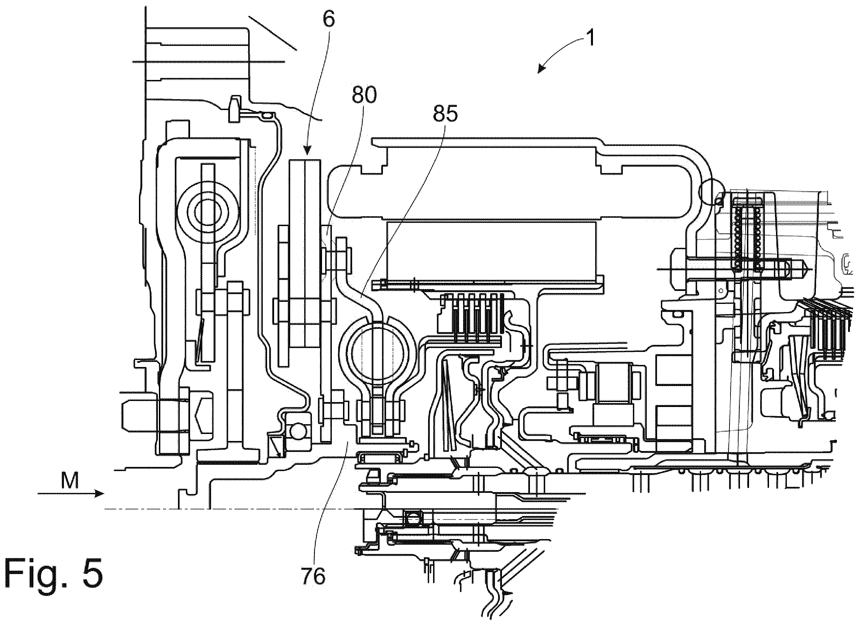

Die Figur 5 zeigt eine Ausführung wie in der Figur 4 beschrieben, jedoch mit einer geänderten Ansteuerung des zweiten Torsionsdämpfers 20. Hier wird die Nabenscheibe 85 an das rechte Bahnblech 80 der Tilgereinheit 6 angenietet. Somit erfolgt die Einleitung des Drehmoments in den zweiten Torsionsdämpfer 20 von radial außen, und nicht von radial innen, wie in der Figur 1 beschrieben. Auf diese Weise ist keine zweite Steckverzahnung an der Tilgernabe 76 erforderlich, wodurch das Bauteil weniger komplex und damit kostengünstiger ausgeführt werden kann.

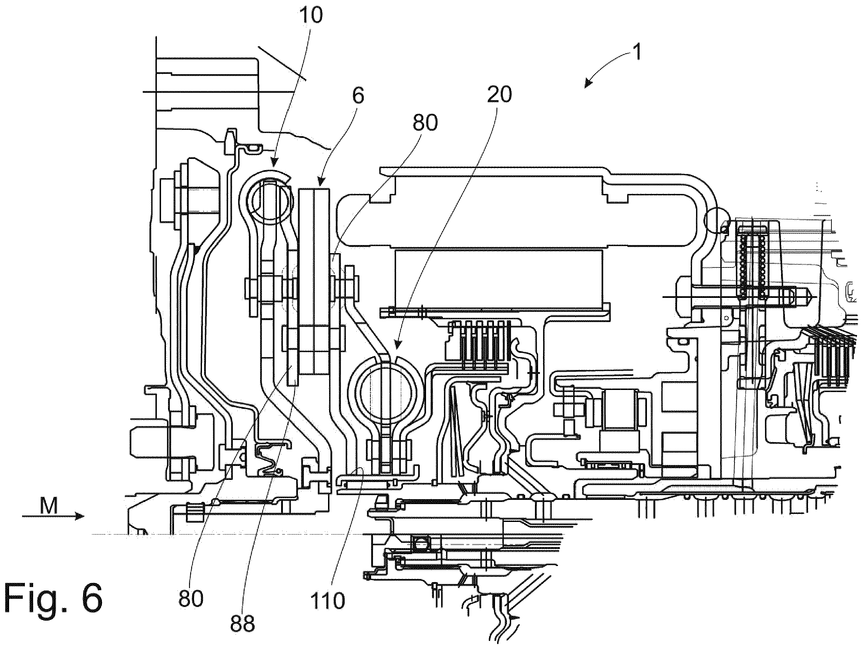

Die Figur 6 zeigt die Einleitung des Drehmoments in den zweiten Torsionsdämpfer 20, analog zur der in der Figur 5 beschriebenen Variante, von radial außen. Zudem wird die Tilgereinheit 6 über einen Zentriersitz 110 am rechten Bahnblech sekundärseitig zentriert. Das rechte Abdeckblech 88 des ersten Torsionsdämpfers 10 dient gleichzeitig als linkes Bahnblech 80 für die Tilgereinheit 6.

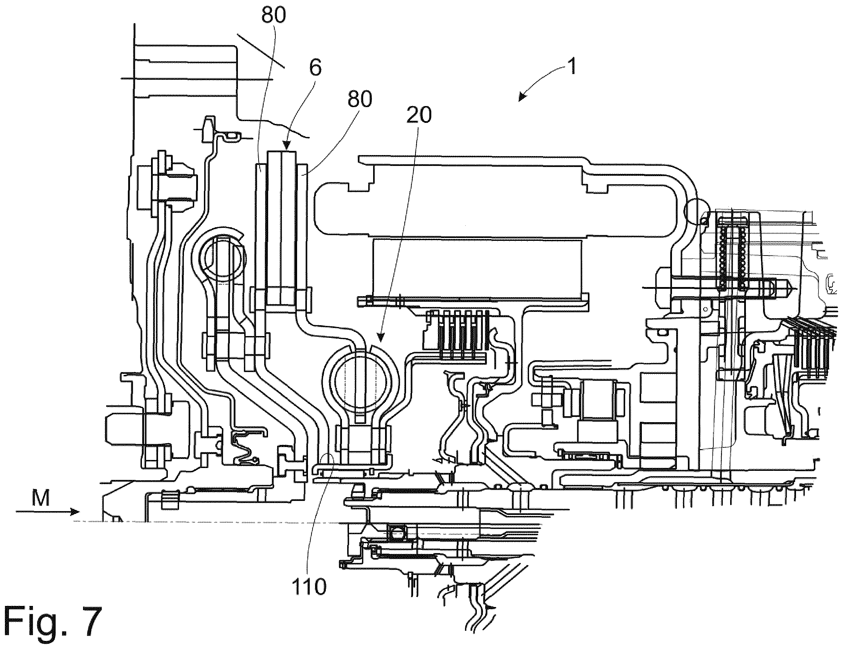

Die Figur 7 zeigt die Ansteuerung des zweiten Torsionsdämpfers 10 über das rechte Bahnblech 80 der Tilgereinheit 6, welches hierfür stark gekröpft ist. Die Zentrierung 110 der Tilgereinheit erfolgt sekundärseitig über das linke Bahnblech 80.

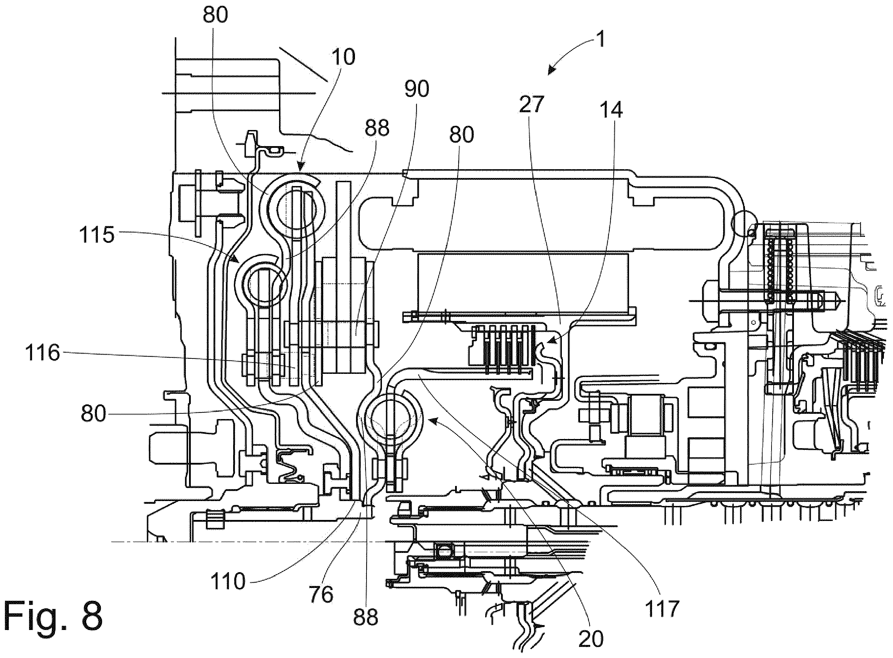

Die Figur 8 zeigt zur besseren Entkopplung von Drehungleichförmigkeiten eine Varianten, bei der vor dem ersten Torsionsdämpfer 10 ein zusätzlicher Dämpfer / Vordämpfer 115 vorgeschalten ist. Das rechte Abdeckblech 88 des Vordämpfers 115 bildet das linke Abdeckblech 88 des ersten Torsionsdämpfers 10. Über das rechte Abdeckblech 88 erfolgt die Zentrierung 110 des ersten Torsionsdämpfers 10 primärseitig an der Torsionsdämpfernabe 76. Über mehrere lange Abstandsstücke 90 ist die Tilgereinheit 6 an die Nabenscheibe 116 des ersten Torsionsdämpfers 10 angebunden. Die Weiterleitung des Drehmoments in den zweiten Torsionsdämpfer 20, sowie die primärseitige Zentrierung der Tilgerbaugruppe 6 erfolgt über das rechte Bahnblech 80. Anders als bei der vorhergehenden Variante stellt das rechte Bahnblech 80 hier das linke Abdeckblech 88 des zweiten Torsionsdämpfers 20 dar. Anders als bei den bisher dargestellten Varianten stellt die Nabenscheibe 117 des zweiten Torsionsdämpfers 20 gleichzeitig den Innenlamellenträger 27 zur Weiterleitung des Drehmoments in die Trennkupplung K0 14 dar.

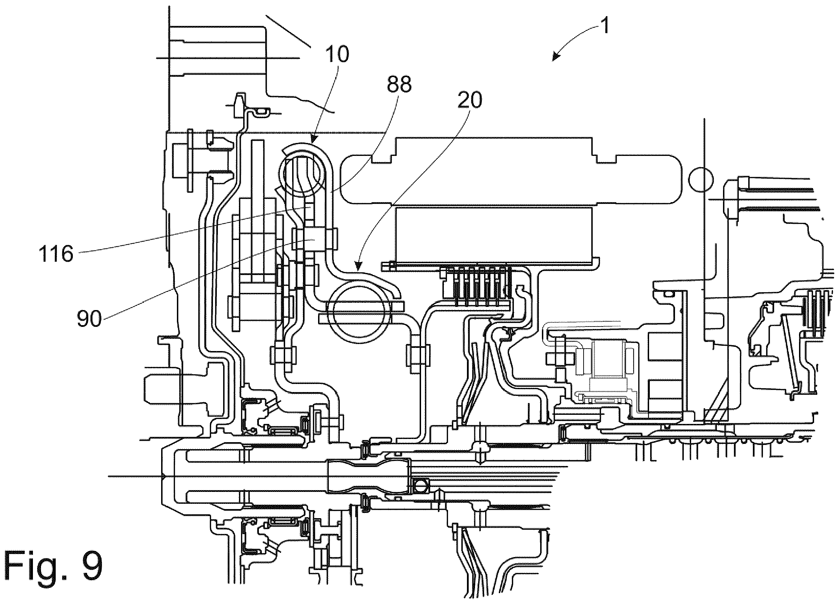

Die Figur 9 zeigt im Vergleich zu den bisherigen Varianten eine Variante mit einer radiale Fliehkraftabstützung des zweiten Torsionsdämpfers 20 durch das rechte Abdeckblech 88 des ersten Torsionsdämpfers 10. Die Tilgereinheit 6 ist über mehrere Abstandsstücke 90 an die Nabenscheibe116 des ersten Torsionsdämpfers 10 angenietet. Vorteilhaft bei dieser Ausführung ist die geringe Anzahl von Bauteilen zur Realisierung der vollständigen Funktionalität der Drehschwingungsdämpfungseinheit.

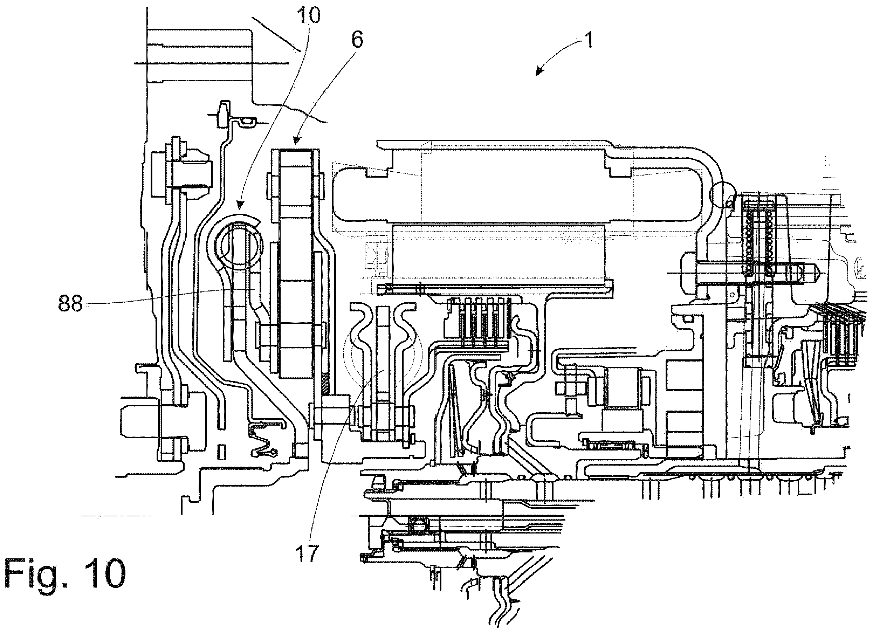

Die Figur 10 zeigt eine Varianten wie bereits in der Figur 2 beschrieben, allerdings ist hier die Tilgereinheit 6, die bisher als ein drehzahladaptiver Tilger ausgeführt war, hier nun als ein variablen drehzahlfesten Tilger ausgeführt. Die Ansteuerung des Tilgers 6 erfolgt über das Abdeckblech 88 des ersten Torsionsdämpfers 10. Über eine Nietverbindung wird das Drehmoment vom Tilger 6 an die Torsionsdämpfernabe 118 des zweiten Torsionsdämpfers 20 weitergeleitet.

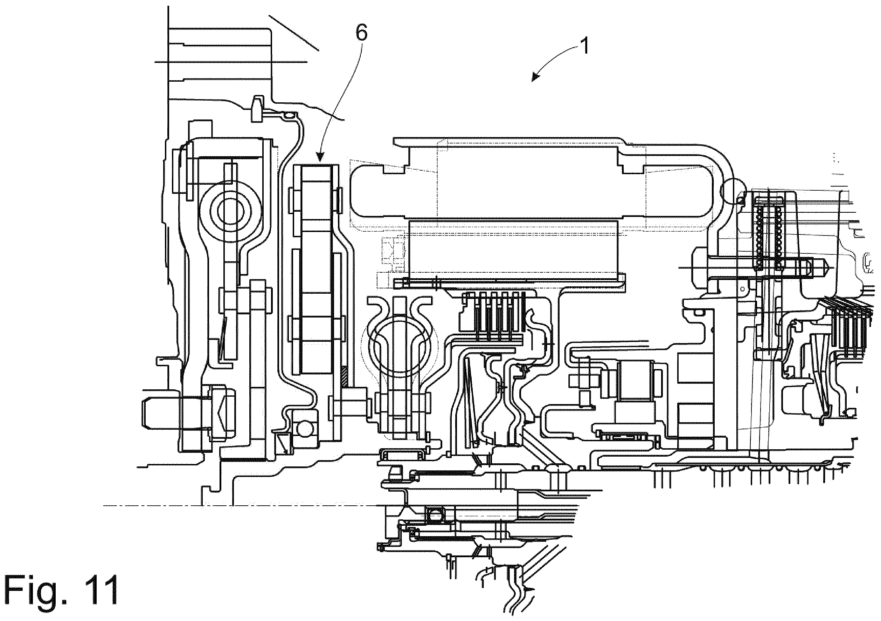

Die Figur 11 zeigt basiert auf der Figur 4. Jedoch ist hier die Tilgereinheit 6, die in der Figur 4 als ein drehzahladaptiver Tilger ausgeführt war, hier nun als ein variabler drehzahlfester Tilger ausgeführt. Der Vorteil dieser dargestellten Ausführungen ist die sehr hohe Güte der Entkopplung von Drehungleichförmigkeiten und eine sehr effiziente Bauraumausnutzung. Weiterhin ist vorteilhaft, dass der variable drehzahlfesten Tilger prinzipbedingt bereits bei niedrigen Motordrehzahlen eine sehr gute Entkopplungsgüte bereitstellt.

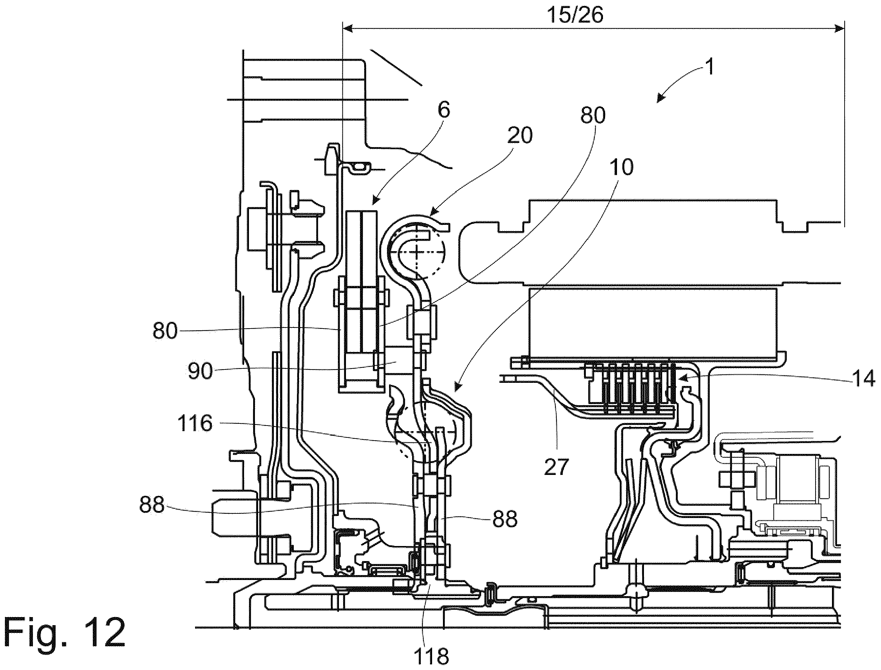

Die Figur 12 zeigt eine weitere Ausführungsmöglichkeit einer Drehschwingungsdämpfungseinheit 15 im ölnebelhaltigen Arbeitsraum 26 dargestellt. Die Einleitung des Drehmoments erfolgt über Abdeckbleche 88, welche an einer Torsionsdämpfernabe 118 angenietet sind, in den ersten Torsionsdämpfer 10. Über eine Nabenscheibe 116 wird ein zweiter Torsionsdämpfer 20 angesteuert. Im Unterschied zu den bisher beschriebenen Varianten befindet sich der zweite Torsionsdämpfer 20 radial weiter außen als der erste Torsionsdämpfer 10. Die Drehmomentweiterleitung in die Trennkupplung K0 14 erfolgt über einen Innenlamellenträger 27.

Die Tilgereinheit 6, hier als ein drehzahladaptiver Tilger ausgeführt, ist über mehrere Abstandsstücke 90 an die Nabenscheibe 116 angebunden. Vorteilhaft ist hier die Verwendung von kostengünstigen, ebenen Bahnblechen 80, welche als Gleichteile ausgeführt werden können. Zudem ist durch die kostengünstigen Abstandsstücke 90 eine flexible Abbindung an den vorhandenen Bauraum möglich, wodurch auf einfache Art und Weise unterschiedliche Baukastenlösungen abgedeckt werden können.

### Bezugszeichen

- 1: Drehmomentübertragungsanordnung
- 2: automatisiertes Hybridgetriebe
- 4: Trennwand
- 5: Dichtung
- 6: Tilgereinheit / drehzahladaptiver Tilger / variabler drehzahlfester Tilger
- 7: Getriebeeingangswelle
- 8: Trennelement / Schottwand / Lagerschild
- 9: Dichtung / O-Ring
- 10: 1. Federsatz / Torsionsdämpfer / Zweimassenschwungrad
- 11: Eingangsteil 1. TD / Primärblech
- 12: Ausgangsteil 1. TD
- 13: Trennelement
- 14: Trennkupplung / K0- Kupplung / Schlupfkupplung
- 15: Drehschwingungsdämpfungseinheit
- 16: Gehäuseelement
- 17: erster Raumbereich
- 18: Tilgermasse
- 19: zweiter Raumbereich
- 20: 2. Federsatz / Torsionsdämpfer
- 24: Trockenraum
- 25: Eingangsbereich
- 26: Feuchtraum
- 27: Innenlamellenträger
- 28: dritter Raumbereich
- 29: Nassraum
- 30: Schlupfanordnung
- 31: Eingangsteil Schlupfkupplung
- 32: Ausgangsteil Schlupfkupplung
- 33: Getriebeeinheit
- 34: Gehäuseelement
- 35: Ausgangsbereich
- 36: Gehäuseelement
- 37: Getriebeanordnung
- 39: Achsversatzausgleichseinheit / Flexplate / Winkelversatzausgleichseinheit
- 40: elektrisches Antriebsaggregat
- 41: Stator elektrische Maschine
- 42: Rotor elektrische Maschine
- 43: automatisiertes Planetengetriebe
- 44: manuelles / automatisiertes Schaltgetriebe
- 45: Driveplate / Anbindungsblech
- 46: Rotorträger
- 50: Antriebsaggragt
- 51: Kurbelwelle
- 55: Ausgangselement
- 60: Massering
- 73: Anfahrelement (Bremse oder Kupplung)
- 75: Steckverzahnung
- 76: Nabe / Tilgernabe
- 80: Bahnblech
- 85: Nabenscheibe
- 86: Schraubenfeder
- 88: Abdecklblech
- 90: Abstandsstück
- 95: Sprengring
- 96: Radialwellendichtring
- 97: Steckverzahnung
- 98: Zwischennabe
- 99: Querbohrung
- 100: Getriebeeingangswelle
- 101: Zwischennabe
- 102: Abdeckblech
- 103: Rotornabe
- 105: Tiefziehblech
- 106: Gussflansch
- 110: Zentriersitz
- 115: Vordämpfer
- 116: Nabenscheibe
- 117: Nabenscheibe
- 118: Torsionsdämpfernabe
- A: Drehachse
- B: Drehachse
- M: Drehmoment
- Me: Drehmoment elektrisches Antriebsaggregat

## Patentansprüche

1. Drehmomentübertragungsvorrichtung (1) für einen Antriebsstrang eines Kraftfahrzeuges,
umfassend
- einen um eine Drehachse (A) drehbaren Eingangsbereich (25) und einen um eine Drehachse B drehbaren Ausgangsbereich (35),
- einen Drehmomentweg (M), der von dem Eingangsbereich (25) zu dem Ausgangsbereich (35) verläuft,
- wobei zwischen dem Eingangsbereich (25) und dem Ausgangsbereich (35) entlang des Drehmomentweges (M) zuerst eine Drehschwingungsdämpfungseinheit (15) und nachfolgend eine Getriebeeinheit (33) positioniert sind,
wobei
die Drehschwingungsdämpfungseinheit (15) entlang des Drehmomentwegs (M) einen ersten Raumbereich (17) und einen angrenzenden zweiten Raumbereich (19) vorsieht, sowie dass die Getriebeeinheit (33) einen angrenzenden dritten Raumbereich (28) vorsieht, wobei, in dem zweiten Raumbereich (19) im Drehmomentweg (M) eine Tilgereinheit (6) vorgesehen ist, wobei im ersten Raumbereich (17) ein erster Federsatz (10) oder eine Winkelversatzausgleichseinheit (38) im Drehmomentweg (M) vorgesehen ist, **dadurch gekennzeichnet, dass** in dem zweiten Raumbereich (19) nach der Tilgereinheit (6) im Drehmomentweg (M) ein zweiter Federsatz (20) oder weitere Federsätze vorgesehen sind,
wobei im zweiten Raumbereich (19) ein elektrisches Antriebsaggregat (40) mit einem Rotor (42) und einem Stator (41) in dem Drehmomentweg (M) vorgesehen ist, wobei der Rotor (42) entlang des Drehmomentweges vom Eingangsbereich (25) zum Ausgangsbereich (35) nach dem zweiten Federsatz (20) vorgesehen ist, wobei eine maximale radiale Erstreckung der Tilgereinheit (6) größer ist als eine maximale radiale Erstreckung des Rotors (42).

2. Drehmomentübertragungsanordnung (1) nach Anspruch 1 , **dadurch gekennzeichnet, dass** die Getriebeeinheit (33) eine Getriebeanordnung (37) umfasst, insbesondere ein automatisiertes Planetenradgetriebe (43) oder ein manuelles oder automatisiertes Schaltgetriebe (44).

3. Drehmomentübertragungsanordnung (1) nach einem der Ansprüche 1 oder 2, **dadurch gekennzeichnet, dass** der erste Raumbereich (17) ein Trockenraum (24) ist und dass der zweite Raumbereich (26) ein Feuchtraum (26) ist und dass der dritte Raumbereich (28) ein Nassraum (29) ist.

4. Drehmomentübertragungsanordnung (1) nach einem der Ansprüche 1 bis 3, **dadurch gekennzeichnet, dass** der erste Raumbereich (17) zu dem zweiten Raumbereich (19) mittels eines separaten Trennelements (8) abgetrennt ist.

5. Drehmomentübertragungsanordnung (1) nach Anspruch 4, **dadurch gekennzeichnet, dass** das Trennelement (8) mit einer radial außen umlaufenden Dichtung (9) versehen ist.

6. Drehmomentübertragungsanordnung (1) nach einem der Ansprüche 1 bis 5, **dadurch gekennzeichnet, dass** die der zweite Raumbereich (17) zu dem dritten Raumbereich (28) mittels eines separaten Trennelements (13) abgetrennt ist oder, wobei das Trennelement (13) integral mit einem Gehäuseelement (34) der Drehschwingungsdämpfungseinheit (15) oder integral mit einem Gehäuseelement (36) der Getriebeeinheit (33) gebildet ist.

7. Drehmomentübertragungsanordnung (1) nach Anspruch 6, **dadurch gekennzeichnet, dass** das Gehäuseelement (34) der Drehschwingungsdämpfungseinheit (15) und das Gehäuseelement (36) der Getriebeeinheit (33) integral ausgebildet sind.

8. Drehmomentübertragungsanordnung (1) nach einem der Ansprüche 1 bis 7, **dadurch gekennzeichnet, dass** der zweite Federsatz (20) oder die weiteren Federsätze einreihig oder mehrreihig ausgebildet sind.

9. Drehmomentübertragungsanordnung (1) nach einem der Ansprüche 1 bis 8, **dadurch gekennzeichnet, dass** im Drehmomentweg (M) vor dem elektrischen Antriebsaggregat (40) eine Trennkupplung (14) vorgesehen ist, wobei die Trennkupplung (14) den Drehmomentweg (M) vom Eingangsbereich (25) bis zum Ausgangsbereich (35) unterbrechen kann und ein Drehmoment (Me), das von dem elektrischen Antriebsaggregat (40) erzeugt wird, zu dem Ausgangsbereich (35) verläuft.

10. Drehmomentübertragungsanordnung (1) nach Anspruch 9, **dadurch gekennzeichnet, dass** die Trennkupplung (14) geeignet ist, das Drehmoment (M) oder Drehmomentanteile (Ma) von dem Eingangsbereich (25) zu dem Ausgangsbereich (35) zu leiten.

11. Drehmomentübertragungsanordnung (1) nach einem der Ansprüche 1 bis 10, **dadurch gekennzeichnet, dass** die die Drehachse (A) zu der Drehachse (B) koaxial verläuft oder dass die die Drehachse (A) zu der Drehachse (B) achsversetzt verläuft.

12. Drehmomentübertragungsanordnung (1) nach einem der Ansprüche 1 bis 11, **dadurch gekennzeichnet, dass** die Getriebeeinheit (33) ein Anfahrelement (73) im Drehmomentweg (M) vorsieht.

13. Drehmomentübertragungsanordnung (1) nach einem der Ansprüche 1 bis 12, **dadurch gekennzeichnet, dass** das Anfahrelement (73) als eine Reibkupplung oder eine Lamellenkupplung oder eine Lamellenbremse ausgeführt ist.

## Claims

1. Torque transmission arrangement (1) for a drive train of a motor vehicle, comprising
- an input region (25) which is rotatable about an axis of rotation (A) and an output region (35) which is rotatable about an axis of rotation (B),
- a torque path (M), which runs from the input region (25) to the output region (35),
- wherein first of all a torsional vibration damping unit (15) and subsequently a gearbox unit (33) are positioned along the torque path (M) between the input region (25) and the output region (35),
the torsional vibration damping unit (15) providing a first spatial region (17) and an adjacent second spatial region (19) along the torque path (M), and the gearbox unit (33) providing an adjacent third spatial region (28), with an absorption unit (6) being provided in the second spatial region (19) in the torque path (M), and a first spring set (10) or an angle-offset-compensating unit (38) being provided in the first spatial region (17) in the torque path (M), **characterized in that** a second spring set (20) or further spring sets is or are provided in the second spatial region (19) downstream of the absorption unit (6) in the torque path (M), an electric drive assembly (40) having a rotor (42) and a stator (41) being provided in the second spatial region (19) in the torque path (M), the rotor (42) being provided along the torque path from the input region (25) to the output region (35) downstream of the second spring set (20), and a maximum radial extent of the absorption unit (6) being greater than a maximum radial extent of the rotor (42).

2. Torque transmission arrangement (1) according to Claim 1, **characterized in that** the gearbox unit (33) comprises a gearbox arrangement (37), in particular an automated planetary gear mechanism (43) or a manual or automated gearbox (44).

3. Torque transmission arrangement (1) according to either of Claims 1 and 2, **characterized in that** the first spatial region (17) is a dry space (24), and **in that** the second spatial region (26) is a moist space (26), and **in that** the third spatial region (28) is a wet space (29).

4. Torque transmission arrangement (1) according to one of Claims 1 to 3, **characterized in that** the first spatial region (17) is separated from the second spatial region (19) by means of a separate separating element (8).

5. Torque transmission arrangement (1) according to Claim 4, **characterized in that** the separating element (8) is provided with a seal (9) encircling it radially on the outside.

6. Torque transmission arrangement (1) according to one of Claims 1 to 5, **characterized in that** the second spatial region (17) is separated from the third spatial region (28) by means of a separate separating element (13), or the separating element (13) being formed integrally with a housing element (34) of the torsional vibration damping unit (15) or integrally with a housing element (36) of the gearbox unit (33).

7. Torque transmission arrangement (1) according to Claim 6, **characterized in that** the housing element (34) of the torsional vibration damping unit (15) and the housing element (36) of the gearbox unit (33) are formed integrally.

8. Torque transmission arrangement (1) according to one of Claims 1 to 7, **characterized in that** the second spring set (20) or the further spring sets are formed in a single row or in multiple rows.

9. Torque transmission arrangement (1) according to one of Claims 1 to 8, **characterized in that** a separating clutch (14) is provided in the torque path (M) upstream of the electric drive assembly (40), the separating clutch (14) being able to interrupt the torque path (M) from the input region (25) as far as the output region (35), and a torque (Me) which is produced by the electric drive assembly (40) running to the output region (35).

10. Torque transmission arrangement (1) according to Claim 9, **characterized in that** the separating clutch (14) is suitable for conducting the torque (M) or torque portions (Ma) from the input region (25) to the output region (35).

11. Torque transmission arrangement (1) according to one of Claims 1 to 10, **characterized in that** the axis of rotation (A) runs coaxially with respect to the axis of rotation (B), or **in that** the axis of rotation (A) runs axially offset with respect to the axis of rotation (B).

12. Torque transmission arrangement (1) according to one of Claims 1 to 11, **characterized in that** the gearbox unit (33) provides a starter element (73) in the torque path (M).

13. Torque transmission arrangement (1) according to one of Claims 1 to 12, **characterized in that** the starter element (73) is designed as a friction clutch or a multi-disc clutch or a multi-disc brake.

## Revendications

1. Agencement de transmission de couple (1) pour une chaîne cinématique d'un véhicule automobile,
comportant
- une région d'entrée (25) pouvant tourner autour d'un axe de rotation (A) et une région de sortie (35) pouvant tourner autour d'un axe de rotation B,
- une voie de couple (M), qui s'étend de la région d'entrée (25) à la région de sortie (35),
- tout d'abord une unité d'amortissement de vibrations de torsion (15) puis une unité de transmission (33) étant positionnées entre la région d'entrée (25) et la région de sortie (35) le long de la voie de couple (M), l'unité d'amortissement de vibrations de torsion (15) prévoyant le long de la voie de couple (M) une première région spatiale (17) et une deuxième région spatiale adjacente (19), et l'unité de transmission (33) prévoyant une troisième région spatiale adjacente (28), une unité d'amortissement (6) étant prévue dans la deuxième région spatiale (19) dans la voie de couple (M), un premier groupe de ressorts (10) ou une unité de compensation de décalage angulaire (38) étant prévu(e) dans la première région spatiale (17) dans la voie de couple (M), **caractérisé en ce qu'**un deuxième groupe de ressorts (20) ou d'autres groupes de ressorts sont prévus dans la deuxième région spatiale (19) après l'unité d'amortissement (6) dans la voie de couple (M), un système d'entraînement électrique (40) doté d'un rotor (42) et d'un stator (41) étant prévu dans la deuxième région spatiale (19) dans la voie de couple (M), le rotor (42) étant prévu après le deuxième groupe de ressorts (20) le long de la voie de couple de la région d'entrée (25) à la région de sortie (35),
une étendue radiale maximale de l'unité d'amortissement (6) étant supérieure à une étendue radiale maximale du rotor (42).

2. Agencement de transmission de couple (1) selon la revendication 1, **caractérisé en ce que** l'unité de transmission (33) comporte un agencement de transmission (37), en particulier une transmission planétaire automatisée (43) ou une transmission à changement de vitesse manuelle ou automatisée (44).

3. Agencement de transmission de couple (1) selon l'une des revendications 1 ou 2, **caractérisé en ce que** la première région spatiale (17) est un espace sec (24) et **en ce que** la deuxième région spatiale (26) est un espace humecté (26) et **en ce que** la troisième région spatiale (28) est un espace humide (29).

4. Agencement de transmission de couple (1) selon l'une des revendications 1 à 3, **caractérisé en ce que** la première région spatiale (17) est séparée de la deuxième région spatiale (19) au moyen d'un élément de séparation séparé (8).

5. Agencement de transmission de couple (1) selon la revendication 4, **caractérisé en ce que** l'élément de séparation (8) est doté d'un joint d'étanchéité (9) périphérique radialement à l'extérieur.

6. Agencement de transmission de couple (1) selon l'une des revendications 1 à 5, **caractérisé en ce que** la deuxième région spatiale (17) est séparée de la troisième région spatiale (28) au moyen d'un élément de séparation séparé (13), ou l'élément de séparation (13) étant formé d'un seul tenant avec un élément de boîtier (34) de l'unité d'amortissement de vibrations de torsion (15) ou d'un seul tenant avec un élément de boîtier (36) de l'unité de transmission (33).

7. Agencement de transmission de couple (1) selon la revendication 6, **caractérisé en ce que** l'élément de boîtier (34) de l'unité d'amortissement de vibrations de torsion (15) et l'élément de boîtier (36) de l'unité de transmission (33) sont formés d'un seul tenant.

8. Agencement de transmission de couple (1) selon l'une des revendications 1 à 7, **caractérisé en ce que** le deuxième groupe de ressorts (20) ou les autres groupes de ressorts sont formés d'une rangée ou de plusieurs rangées.

9. Agencement de transmission de couple (1) selon l'une des revendications 1 à 8, **caractérisé en ce qu'**un embrayage de séparation (14) est prévu dans la voie de couple (M) avant le système d'entraînement électrique (40), l'embrayage de séparation (14) pouvant interrompre la voie de couple (M) de la région d'entrée (25) à la région de sortie (35) et un couple (Me), qui est généré par le système d'entraînement électrique (40), s'étendant jusqu'à la région de sortie (35).

10. Agencement de transmission de couple (1) selon la revendication 9, **caractérisé en ce que** l'embrayage de séparation (14) est approprié à guider le couple (M) ou des parties de couple (Ma) de la région d'entrée (25) à la région de sortie (35).

11. Agencement de transmission de couple (1) selon l'une des revendications 1 à 10, **caractérisé en ce que** l'axe de rotation (A) s'étend coaxialement à l'axe de rotation (B) ou **en ce que** l'axe de rotation (A) s'étend de manière décalée axialement par rapport à l'axe de rotation (B).

12. Agencement de transmission de couple (1) selon l'une des revendications 1 à 11, **caractérisé en ce que** l'unité de transmission (33) prévoit un élément de démarrage (73) dans la voie de couple (M).

13. Agencement de transmission de couple (1) selon l'une des revendications 1 à 12, **caractérisé en ce que** l'élément de démarrage (73) est conçu sous la forme d'un embrayage friction ou d'un embrayage à disques ou d'un frein à disques.
